# EUROPEAN PATENT APPLICATION

(11) **EP 2 801 937 A1**
(43) Date of publication of application: **12.11.2014**
(21) Application number: 14167703.9
(22) Date of filing: 09.05.2014
(51) Int. Cl.: G06Q 10/06

(54) **Industrial device and system attestation in a cloud platform**

(30) Priority: 09.05.2013 US 201361821639 P; 22.11.2013 US 201314087970
(71) Applicant: Rockwell Automation Technologies, Inc., Mayfield Heights, OH 44124 (US)
(72) Inventor: Asenjo, Juan L., Timberlake, OH Ohio 44095 (US); Strohmenger, John, Strongsville, OH Ohio 44136 (US); Nawalaniec, Stephen Thomas, Southlake, TX Texas 76092 (US); Hegrat, Bradford Henry, Montville, OH Ohio 44064 (US); Harkulich, Joseph A., Willoughby, OH Ohio 44094 (US); Korpela, Jessica Lin, Milwaukee, WI Wisconsin 53207 (US); Wright, Jenifer Rydberg, Renton, WA Washington 98058 (US); Hessmer, Rainer, Rancho Santa Margarita, CA California 92688 (US); Dyck, John, Chardon, OH Ohio 44024 (US); Hill, Edward Alan, Chagrin Falls, OH Ohio 44022 (US); Conti, Salvatore T., Olmsted Township, OH Ohio 44138 (US)
(74) Representative: Grünecker, Kinkeldey, Stockmair & Schwanhäusser

(57) **Abstract**

An industrial attestation service executing on a cloud platform collects industrial data from multiple levels of an industrial enterprise and identifies subsets of the industrial data that characterize normal operation. In the cloud platform, baselines are generated for diverse aspects of the industrial enterprise based on the identified subsets, where the baselines characterize normal operation. The baselines are used as a reference in connection with device and system attestation, Aspects of the industrial enterprise that deviate from their corresponding baselines are identified in the cloud platform. Attestation reports indicating aspects of the enterprise that have altered relative to their baselines are delivered to client devices via the cloud platform.

## Description

### RELATED APPLICATIONS

This application claims the benefit of U.S. Provisional Patent Application Serial No. 61/821,639, filed on May 9, 2013, and entitled "REMOTE SERVICES AND ASSET MANAGEMENT SYSTEMS AND METHODS," the entirety of which is incorporated herein by reference.

### TECHNICAL FIELD

The subject application relates generally to industrial automation, and, more particularly, to attestation of industrial devices and systems in a cloud platform.

### BACKGROUND

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such programming structures. In general, industrial controllers read input data from sensors and metering devices that provide discreet and telemetric data regarding one or more states of the controlled system, and generate control outputs based on these inputs in accordance with the user-defined program.

In addition to industrial controllers and their associated I/O devices, some industrial automation systems may also include low-level control systems, such as vision systems, barcode marking systems, variable frequency drives, industrial robots, and the like which perform local control of portions of the industrial process, or which have their own localized control systems.

Industrial systems that are designed to carry out a particular industrial application (*e.g*., batch processing, product or part fabrication, motion control or other closed-loop control, *etc*.) often comprise multiple industrial assets and associated devices. Optimal performance of the industrial application (which can be measured as a function of product output, cycle time, control accuracy, resource utilization, product quality, failure rate, and/or other such metrics) is a function of several factors, including individual device configuration, operator interaction with the system, timely delivery of supplier materials or ingredients, regular and non-intrusive maintenance scheduling, proper tuning of control loops, health of the plant network over which the industrial assets communicate with one another, and/or other such factors. In general, correct performance of an industrial system is a function of many factors across all levels of the industrial enterprise, from low-level device configuration aspects to higher level plant and supply chain considerations.

Once an industrial system is in operation, tracking and monitoring the many factors that ensure optimal operation of the overall industrial application poses a challenge to asset owners and maintenance personnel. For example, changing one or more configuration parameters on a particular device in order to address a local maintenance issue may impact performance of the greater industrial application in unexpected ways (*e.g*., increase production cycle times, adversely affect operation of a downstream asset, increase energy utilization and associated utility costs, *etc*.). In such scenarios, the impact of such a parameter change on overall system performance may be recognized, but the root cause (the device parameter change) can be difficult to identify. Similarly, changes to other aspects of the enterprise - altered work schedules, deviations from preferred sequences of operator interactions, device replacements, network recontigurations, an ingredient substitution, *etc. -* can adversely affect overall system performance in ways that are difficult to predict or identify.

The above-described deficiencies of today's industrial control and business systems are merely intended to provide an overview of some of the problems of conventional systems, and are not intended to be exhaustive. Other problems with conventional systems and corresponding benefits of the various non-limiting embodiments described herein may become further apparent upon review of the following description.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

One or more embodiments of the present disclosure relate to remote device and system attestation using a cloud platform. Attestation refers to the process of confirming correct system operation or configuration, relative to one or more defined operational criteria (*e.g*., a product output criteria, an energy consumption criteria, a cost criteria, *etc*.). In one or more embodiments, a cloud-based attestation system running as a service on a cloud platform can collect and monitor device, asset, and system data from an industrial facility and/or supply chain. At the device level, the collected data can include device configuration information (*e.g*., device identifier, firmware version, configurations settings, *etc.*) as well as real-time status information for the devices (health and diagnostics, faults, alarms, *etc*.). At the asset and system levels, the collected data can include such information as asset key performance indicators (KPIs), process variables, and characterizations of larger system behavior over time.

The cloud-based attestation system can collect the industrial data from multiple levels of the system hierarchy so that changes at all levels can be tracked, from the highest levels (*e.g*., plant or supply chain characteristics, production line or production area characteristics) to the lowest levels (*e.g.*, asset key performance indicators, process variables, device configurations and firmware versions, *etc*.). The attestation system can perform analysis on the collected data over time to learn system characteristics associated with proper operation of the industrial system. When correct operation has been identified, the cloud-based attestation system can generate a set of baselines across multiple levels of the industrial enterprise. In one or more embodiments, the baselines can comprise hash values calculated for respective aspects of the system (*e.g*., device and asset configurations, controller programming, firmware versions, recipes, network traffic, *etc.*) based on the data collected for those aspects, resulting in a virtual snapshot of correct system configuration and operation.

Once the multi-level baselines have been identified, cloud-based attestation system can affirm correct configuration and operation of each device and asset comprising the industrial system. In one or more embodiments, this can be achieved by calculating new hash values (or other comparison metrics) for recently collected system data and comparing these new values with the baseline values obtained previously based on past successful operations. The attestation system can then identify which aspects of the system have changed relative to the previous successful operations based on deviations between the current and baseline hash values. For example, based on these hash comparisons, the attestation system can determine that a configuration parameter for a particular device at one of the production lines has been altered, or that a program executing on an industrial controller has been altered. The deviant system aspects can then be identified to a user via a report or an interactive graphical representation of the industrial system.

One or more embodiments of the cloud-based attestation system can also monitor human behavior in order to affirm correct operator interaction with an industrial system. To this end, the attestation system can infer human interaction with the system based on monitored keystrokes, human-machine interface (HMI) navigations, control panel operations, and other such indicators of human behavior in order to confirm that a correct manual sequence is being followed by the operator. Deviations from the correct manual sequence can be identified as a possible cause of a performance problem or inefficiency.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a high-level overview of an industrial enterprise that leverages cloud-based services.
FIG. 2 is a block diagram of an exemplary cloud-based attestation system.
FIG. 3 illustrates collection of customer-specific industrial data by a cloud-based attestation system.
FIG. 4 illustrates a hierarchical relationship between example data classes.
FIG. 5 illustrates a configuration in which an industrial device acts as a cloud proxy for other industrial devices comprising an industrial system.
FIG. 6 illustrates a configuration in which a firewall box serves as a cloud proxy for a set of industrial devices.
FIG. 7 illustrates delivery of a device model to a cloud-based attestation system.
FIG. 8 illustrates a cloud-based system for providing device and system attestation services.
FIG. 9 illustrates generation of multi-level baseline data for a given set of customer data.
FIG. 10 illustrates example hierarchical system aspects for which baselines can be calculated by a cloud-based attestation system.
FIG. 11 illustrates generation of device and system attestation data by the cloud-based attestation system.
FIG. 12 illustrates delivery of attestation data to a cloud-capable client device via the cloud platform.
FIG. 13 illustrates an example cloud-based architecture that allows remote technical support personnel to generate and/or view attestation data for a customer's industrial systems.
FIG. 14 is a flowchart of an example methodology for performing system and device attestation on an industrial system.
FIG. 15 is a flowchart of an example methodology for performing device or system attestation in a cloud platform using hash values.
FIG. 16 is a flowchart of an example methodology for updating a hierarchical graphical representation of an industrial enterprise to identify deviations from normal operation.
FIG. 17 is an example computing environment.
FIG. 18 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller,'" "terminal," "station,'" "node,"" "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (*e.g*., screwed or bolted) or removably affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (*e.g*., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference"" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "oar" rather than an exclusive "oar." That is, unless specified otherwise, or clear from the context, the phrase "X employs A or B" is intended to mean any of the nature] inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; *e.g.*, the set with no elements therein. Thus, a "set" in the subject disclosure includes one or more elements or entities. As an illustration, a set of controllers includes one or more controllers; a set of data resources includes one or more data resources; *etc.* Likewise, the term "group" as utilized herein refers to a collection of one or more entities; *e.g.,* a group of nodes refers to one or more nodes.

Various aspects or features will be presented in terms of systems that may include a number of devices, components, modules, and the like. It is to be understood and appreciated that the various systems may include additional devices, components, modules, *etc.,* and/or may not include all of the devices, components, modules *etc.* discussed in connection with the figures. A combination of these approaches also can be used.

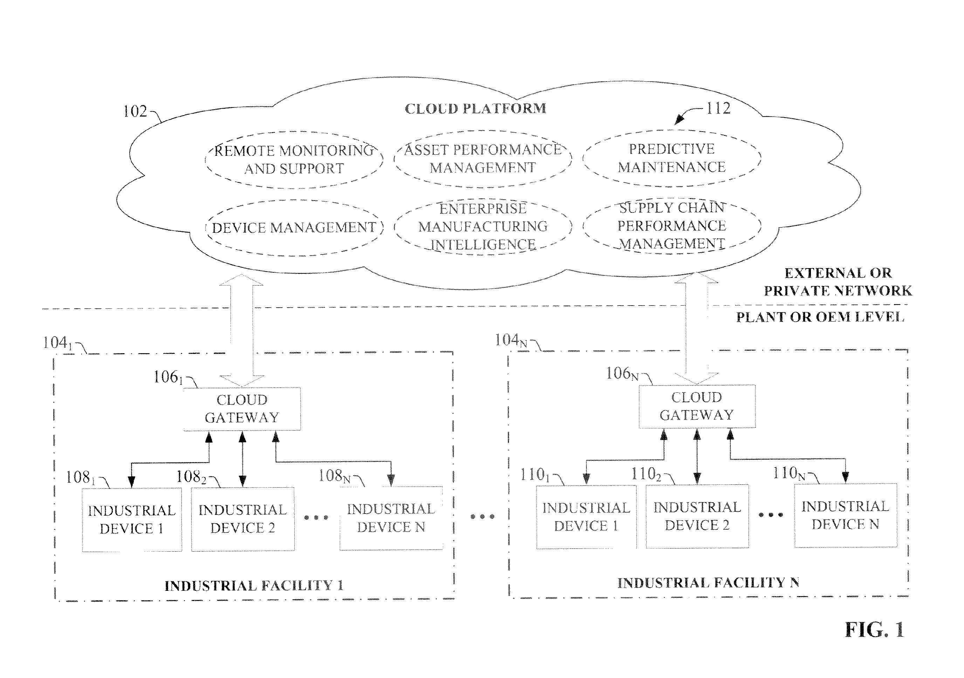

To provide a general context for the cloud-based attestation system and services described herein, FIG. 1 illustrates a high-level overview of an industrial enterprise that leverages cloud-based services. The enterprise comprises one or more industrial facilities 104, each having a number of industrial devices 108 and 110 in use. The industrial devices 108 and 110 can make up one or more automation systems operating within the respective facilities 104. Exemplary automation systems can include, but are not limited to, batch control systems (*e.g*., mixing systems), continuous control systems (*e.g.*, PID control systems), or discrete control systems Industrial devices 108 and 110 can include such devices as industrial controllers (*e.g*., programmable logic controllers or other types of programmable automation controllers); field devices such as sensors and meters; motor drives; human-machine interfaces (HMIs); industrial robots, barcode markers and readers; vision system devices (e.g., vision cameras); smart welders; or other such industrial devices.

Exemplary automation systems can include one or more industrial controllers that facilitate monitoring and control of their respective processes. The controllers exchange data with the field devices using native hardwired I/O or via a plant network such as Ethernet/IP, Data Highway Plus, ControlNet, Devicenet, or the like. A given controller typically receives any combination of digital or analog signals from the field devices indicating a current state of the devices and their associated processes (*e.g*., temperature, position, part presence or absence, fluid level, *etc*.), and executes a user-defined control program that performs automated decision-making for the controlled processes based on the received signals. The controller then outputs appropriate digital and/or analog control signaling to the field devices in accordance with the decisions made by the control program. These outputs can include device actuation signals, temperature or position control signals, operational commands to a machining or material handling robot, mixer control signals, motion control signals, and the like. The control program can comprise any suitable type of code used to process input signals read into the controller and to control output signals generated by the controller, including but not limited to ladder logic, sequential function charts, function block diagrams, structured text, or other such platforms.

Although the exemplary overview illustrated in F1G. 1 depicts the industrial devices 108 and 110 as residing in fixed-location industrial facilities 104, the industrial devices may also be part of a mobile control and/or monitoring application, such as a system contained in a truck or other service vehicle.

According to one or more embodiments of this disclosure, industrial devices 108 and 110 can be coupled to a cloud platform 102 to leverage cloud-based applications and services. That is, the industrial devices 108 and 110 can be configured to discover and interact with cloud-based computing services 112 hosted by cloud platform 102. Cloud platform 102 can be any infrastructure that allows shared computing services 112 to be accessed and utilized by cloud-capable devices. Cloud platform 102 can be a public cloud accessible via the Internet by devices having Internet connectivity and appropriate authorizations to utilize the services 112. In some scenarios, cloud platform 102 can be provided by a cloud provider as a platform-as-a-service (PaaS), and the services 112 can reside and execute on the cloud platform 102 as a cloud-based service. In some such configurations, access to the cloud platform 102 and associated services 112 can be provided to customers as a subscription service by an owner of the services 112. Alternatively, cloud platform 102 can be a private cloud operated internally by the enterprise. An exemplary private cloud platform can comprise a set of servers hosting the cloud services 112 and residing on a corporate network protected by a firewall.

Cloud services 112 can include, but are not limited to, data storage, data analysis, control applications (*e.g*., applications that can generate and deliver control instructions to industrial devices 108 and 110 based on analysis of near real-time system data or other factors), remote monitoring and support, remote device and system attestation, device management, asset performance management, predictive maintenance services, enterprise manufacturing intelligence services, supply chain performance management, notification services, or other such applications. If cloud platform 102 is a web-based cloud, industrial devices 108 and 110 at the respective industrial facilities 104 may interact with cloud services 112 via the Internet. In an exemplary configuration, industrial devices 108 and 110 may access the cloud services 112 through separate cloud gateways 106 at the respective industrial facilities 104, where the industrial devices 108 and 110 connect to the cloud gateways 106 through a physical or wireless local area network or radio link. In another exemplary contiguration, the industrial devices 108 and 110 may access the cloud platform directly using an integrated cloud gateway service. Cloud gateways 106 may also comprise an integrated component of a network infrastructure device, such as a firewall box, router, or switch.

Providing industrial devices with cloud capability via cloud gateways 106 can offer a number of advantages particular to industrial automation. For one, cloud-based storage offered by the cloud platfonn 102 can be easily scaled to accommodate the large quantities of data generated daily by an industrial enterprise. Moreover, multiple industrial facilities at different geographical locations can migrate their respective automation data to the cloud platform 102 for aggregation, collation, collective big data analysis, and enterprise-level reporting without the need to establish a private network between the facilities. Industrial devices 108 and 110 and/or cloud gateways 106 having smart configuration capability can be configured to automatically detect and communicate with the cloud platform 102 upon installation at any facility, simplifying integration with existing cloud-based data storage, analysis, or reporting applications used by the enterprise. In another exemplary application, cloud-based diagnostic applications can access the industrial devices 108 and 110 via cloud gateways 106 to monitor the health of respective automation systems or their associated industrial devices across an entire plant, or across multiple industrial facilities that make up an enterprise. In another example, cloud-based lot control applications can be used to track a unit of product through its stages of production and collect production data for each unit as it passes through each stage (e.g., barcode identifier, production statistics for each stage of production, quality test data, abnormal flags, *etc*.). These industrial cloud-computing applications are only intended to be exemplary, and the systems and methods described herein are not limited to these particular applications. As these examples demonstrate, the cloud platform 102, corking with cloud gateways 106, can allow builders of industrial applications to provide scalable solutions as a service, removing the burden of maintenance, upgrading, and backup of the underlying infrastructure and framework.

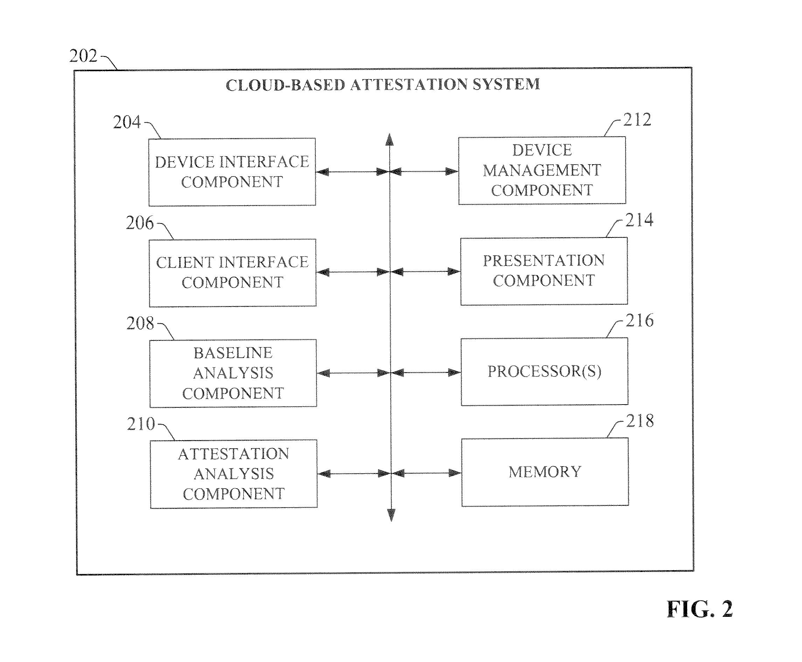

FIG. 2 is a block diagram of an exemplary cloud-based attestation system according to one or more embodiments of this disclosure. Aspects of the systems, apparatuses, or processes explained in this disclosure can constitute machine-executable components embodied within machine(s), *e.g.,* embodied in one or more computer-readable mediums (or media) associated with one or more machines. Such components, when executed by one or more machines, *e.g.,* computer(s), computing device(s), automation device(s), virtual machine(s), *etc.,* can cause the machine(s) to perform the operations described.

Attestation system 202 can include a device interface component 204, client interface component 206, a baseline analysis component 208, an attestation analysis component 210, a device management component 212, a presentation component 214, one or more processors 216, and memory 218. In various embodiments, one or more of the device interface component 204, client interface component 206, baseline analysis component 208, attestation analysis component 210, device management component 212, presentation component 214, the one or more processors 216, and memory 218 can be electrically and/or communicatively coupled to one another to perform one or more of the functions of the attestation system 202. In some embodiments, components 204, 206, 208, 210, and 212 can comprise software instructions stored on memory 218 and executed by processor(s) 216. Attestation system 202 may also interact with other hardware and/or software components not depicted in FIG. 2. For example, processor(s) 214 may interact with one or more external user interface devices, such as a keyboard, a mouse, a display monitor, a touchscreen, or other such interface devices.

Device interface component 204 can be configured to receive industrial data (*e.g*., configuration data, status data, process variable data, etc.) sent by one or more cloud-capable industrial devices, cloud gateways, or other sources of industrial data. Client interface component 206 can be configured to exchange data with one or more client devices via an Internet connection. For example, client interface component 206 can receive customer profile data, requests for system attestation reports, navigation input for navigating graphical representations of an industrial system, or other such information from a client device. Client interface component 206 can also deliver attestation reports, notifications of changes to the industrial system, identification of altered system configurations, configuration recommendations, or other such data to the client device.

Baseline analysis component 208 can be configured to monitor collected data from an industrial facility and/or supply chain, learn correct system performance, and identify sets of data corresponding to various aspects of the industrial enterprise (*e.g*., device configurations, production line output and cycle times, maintenance schedules, downtime occurrences, *etc*.) for normal performance runs. Baseline analysis component 208 can also be configured to generate baseline indicators for the respective sets of data for comparative purposes.

Attestation analysis component 210 can be configured to analyze data collected from the industrial facility and/or supply chain subsequent to determination of the multi-level baselines to affirm that aspects of the industrial enterprise are operating (or are configured) within the previously determined baselines. If a deviation from the baselines is detected, attestation analysis component 210 can identify and report the deviant aspect of the industrial system.

Device management component 212 can be configured to maintain and manage current information on devices comprising one or more industrial assets in use at an industrial facility. This information can include device identifiers, current firmware versions, current device configuration settings, information on neighboring devices that interact with the device, a role of the device within a larger system context, or other such information.

Presentation component 214 can be configured to generate reports, interactive graphical representations, or other types of user output for delivery to a client device. Presentation outputs generated by presentation component 214 can identify system aspects that have been altered relative to baseline operation, and which may be a root cause of a system performance failure or degradation.

The one or more processors 216 can perform one or more of the functions described herein with reference to the systems and/or methods disclosed. Memory 218 can be a computer-readable storage medium storing computer-executable instructions and/or information for performing the functions described herein with reference to the systems and/or methods disclosed.

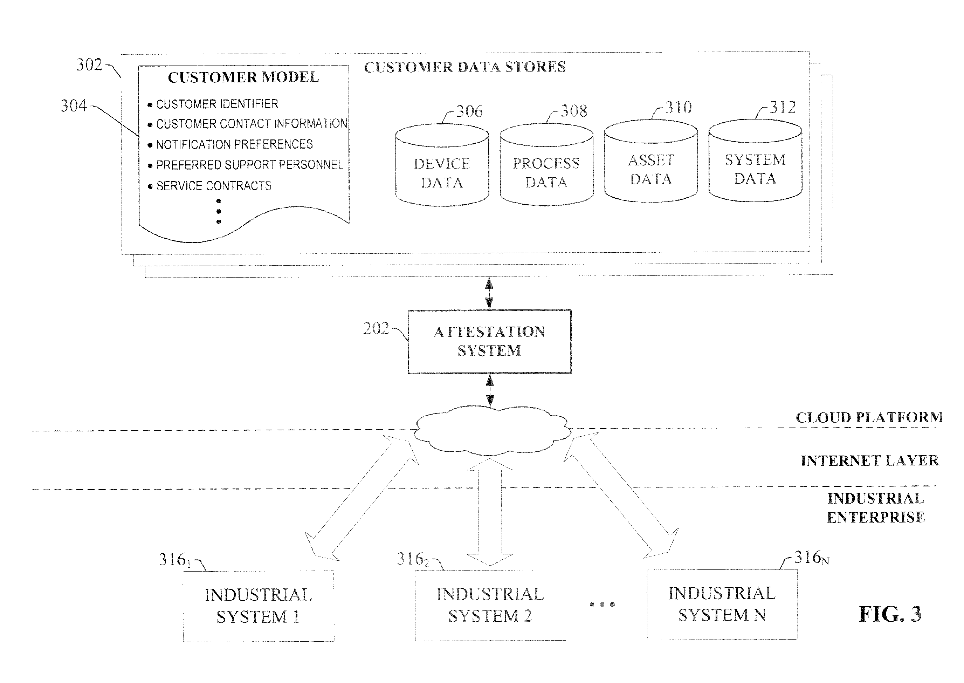

FIG. 3 illustrates collection of customer-specific industrial data by a cloud-based attestation system according to one or more embodiments. Attestation system 202 can execute as a cloud-based service on a cloud platform (e.g., cloud platform 102 of FIG. 1), and collect data from multiple industrial systems 316. Industrial systems 316 can comprise different industrial automation systems within a given facility and/or different industrial facilities at diverse geographical locations. Industrial systems 316 can also correspond to different business entities (e.g., different industrial enterprises or customers), such that attestation system 202 collects and maintains a distinct customer data store 302 for each customer or business entity.

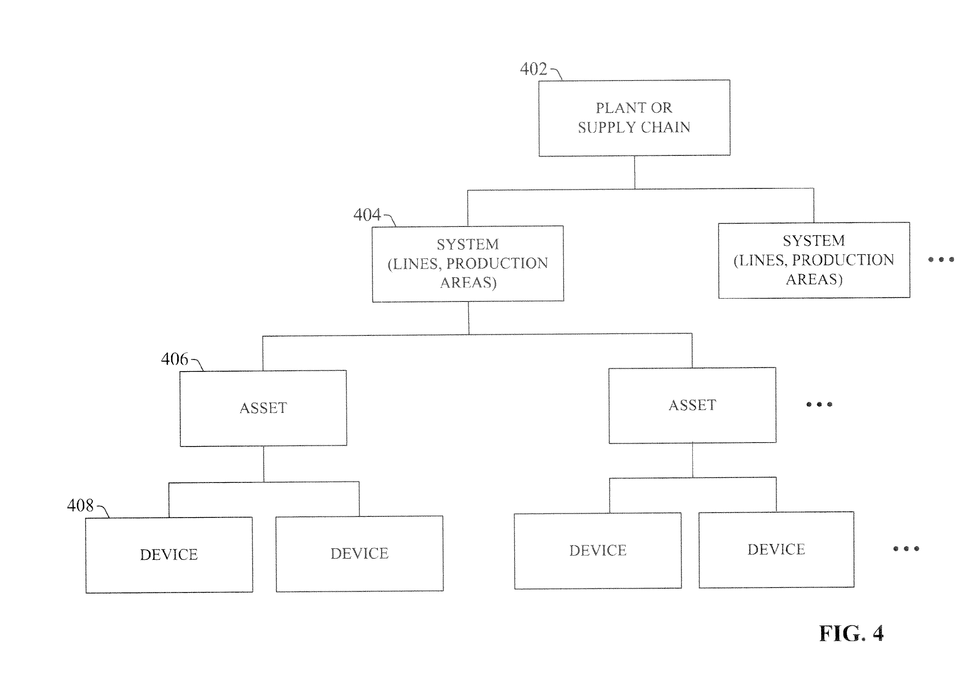

Attestation system 202 can organize manufacturing data collected from industrial systems 316 according to various classes. In the illustrated example, manufacturing data is classified according to device data 306, process data 308, asset data 310, and system data 312. FIG. 4 illustrates a hierarchical relationship between these example data classes. A given plant or supply chain 402 can comprise one or more industrial systems 404. Systems 404 represent the production lines or productions areas within a given plant facility or across multiple facilities of a supply chain. Each system 404 is made up of a number of assets 406 representing the machines and equipment that make up the system (*e.g*., the various stages of a production line). In general, each asset 406 is made up of multiple devices 408, which can include, for example, the programmable controllers, motor drives, human-machine interfaces (HMIs), sensors, meters, *etc.* comprising the asset 406. The various data classes depicted in FIGs. 3 and 4 are only intended to be exemplary, and it is to be appreciated that any organization of industrial data classes maintained by attestation system 202 is within the scope of one or more embodiments of this disclosure.

Returning now to FIG. 3, attestation system 314 collects and maintains data from the various devices and assets that make up industrial systems 316 and classifies the data according to the aforementioned classes for the purposes of near real-time monitoring and attestation analysis. Device data 306 can comprise device-level information relating to the identity, configuration, and status of the respective devices comprising industrial systems 316, including but not limited to device identifiers, device statuses, current firmware versions, health and diagnostic data, device documentation, identification and relationship of neighboring devices that interact with the device, *etc.*

Process data 308 can comprise information relating to one or more processes or other automation operations carried out by the devices; *e.g.*, device-level and process-level faults and alarms, process variable values (speeds, temperatures, pressures, *etc.*)*,* and the like.

Asset data 310 can comprise information generated collected or inferred based on data aggregated from multiple industrial devices over time, which can yield a higher asset-level views of industrial systems 316. Example asset data 310 can include performance indicators (KPIs) for the respective assets, asset-level process variables, faults, alarms, *etc.* Since asset data 310 yields a longer term view of asset characteristics relative to the device and process data, attestation system 202 can leverage asset data 310 to identify operational patterns and correlations unique to each asset, among other types of analysis.

System data 312 can comprise collected or inferred information generated based on data aggregated from multiple assets over time. System data 312 can characterize system behavior within a large system of assets, yielding a system-level view of each industrial system 316. System data 312 can also document the particular system configurations in use and industrial operations performed at each industrial system 316. For example, system data 312 can document the arrangement of assets, interconnections between devices, the product being manufactured at a given facility, an industrial process performed by the assets, a category of industry of each industrial system (*e.g*., automotive, oil and gas, food and drug, marine, textiles, *etc*.)*,* or other relevant information. Among other functions, this data can be accessed by technical support personnel during a support session so that particulars of the customer's unique system and device configurations can be obtained without reliance on the customer to possess complete knowledge of their assets.

As an example, a given industrial facility can include packaging line (the system), which in turn can comprise a number of individual assets (a filler, a labeler, a capper, a palletizer, *etc*.). Each asset comprises a number of devices (controllers, variable frequency drives, HMIs, *etc.*). Using an architecture similar to that depicted in FIG. 1, attestation system 202 can collect industrial data from the individual devices during operation and classify the data in a customer data store 302 according to the aforementioned classifications. Note that some data may be duplicated across more than one class. For example, a process variable classified under process data 308 may also be relevant to the asset-level view of the system represented by asset data 310. Accordingly, such process variables may be classified under both classes. Moreover, subsets of data in one classification may be derived or inferred based on data under another classification. Subsets of system data 312 that characterize certain system behaviors, for example, may be inferred based on a longterm analysis of data in the lower-level classifications.

In addition to maintaining data classes 306-312, each customer data store can also maintain a customer model 304 containing data specific to a given industrial entity or customer. Customer model 304 contains customer-specific information and preferences, which can be leveraged by attestation system 202 to determine how detected baseline deviations should be handled. Example information maintained in customer model 304 can include a client identifier, client contact information specifying which plant personnel should be notified in response to detection of certain baseline deviations (where the identified plant personnel may be dependent upon a production area or hierarchical level at which the deviation is detected), notification preferences specifying how plant personnel should be notified (*e.g*., email, mobile phone, text message, *etc*.), preferred technical support personnel to be contacted in the event of a detected attestation concern, service contracts that are active between the customer and the technical support entity, and other such information. Attestation system 202 can marry data collected for each customer with the customer model for identification and event handling purposes.

As noted above, industrial data can be migrated from industrial devices to the cloud platform using cloud gateways. To this end, some devices may include integrated cloud gateways that directly interface each device to the cloud platform. Alternatively, some configurations may utilize a cloud proxy device that collects industrial data from multiple devices and sends the data to the cloud platform. Such a cloud proxy can comprise a dedicated data collection device, such as a proxy server that shares a network with the industrial devices. Alternatively, the cloud proxy can be a peer industrial device that collects data from other industrial devices.

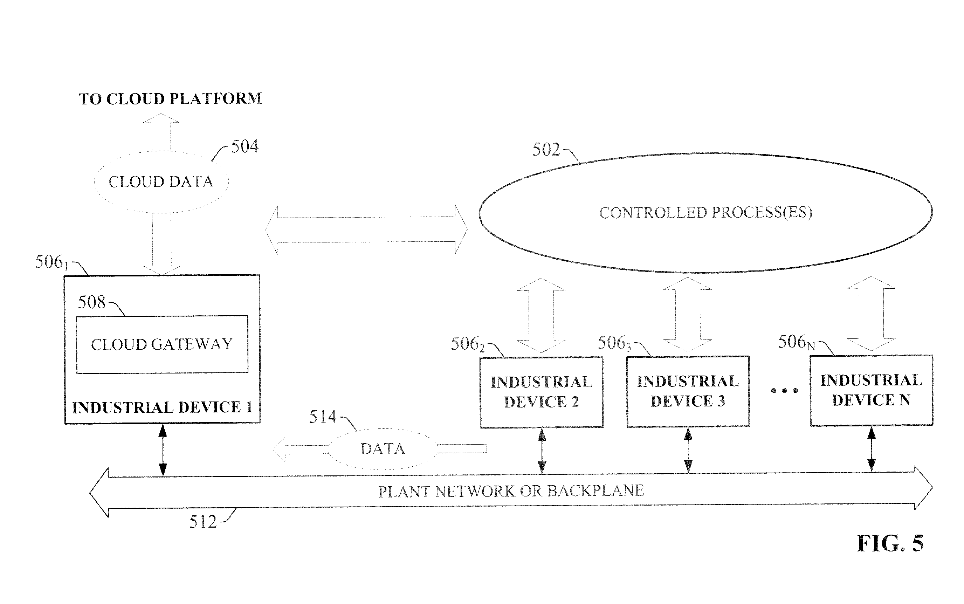

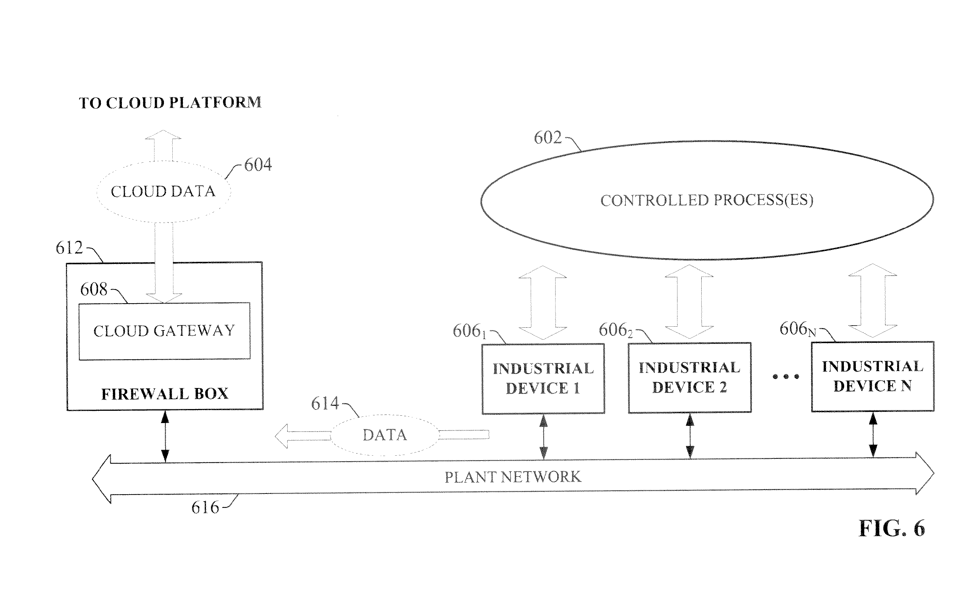

FIGs. 5 and 6 depict example techniques for migrating industrial data to the cloud platform via proxy devices for classification and analysis by the cloud-based attestation system. FIG. 5 depicts a configuration in which an industrial device acts as a cloud proxy for other industrial devices comprising an industrial system. The industrial system comprises a plurality of industrial devices 506₁ - 506_{N} which collectively monitor and/or control one or more controlled processes 502. The industrial devices 506₁ - 506_{N} respectively generate and/or collect process data relating to control of the controlled process(es) 502. For industrial controllers such as PLCs or other automation controllers, this can include collecting data from telemetry devices connected to the controller's I/O, generating data internally based on measured process values, *etc.*

In the configuration depicted in FIG. 5, industrial device 506, acts as a proxy for industrial devices 506₂ - 506_{N}, whereby data 514 from devices 506₂ - 506_{N} is sent to the cloud via proxy industrial device 506₁. Industrial devices 506₂ - 506_{N} can deliver their data 14 to proxy industrial device 506₁ over plant network or backplane 512 (*e.g*., a Common Industrial Protocol (CIP) network or other suitable network protocol). Using such a configuration, it is only necessary to interface one industrial device to the cloud platform (via cloud gateway 508). In some embodiments, cloud gateway 508 may perform preprocessing on the gathered data prior to migrating the data to the cloud platform (*e.g*., time stamping, filtering, formatting, summarizing, compressing, *etc*.). The collected and processed data can then be pushed to the cloud platform as cloud data 504 via cloud gateway 508. Once migrated, the cloud-based predictive maintenance system can classify the data according to the example classifications discussed above.

While the proxy device illustrated in FIG. 5 is depicted as an industrial device that itself performs monitoring and/or control of a portion of controlled process(es) 502, other types of devices can also be configured to serve as a cloud proxies for multiple industrial devices according to one or more embodiments of this disclosure. For example, FIG. 6 illustrates an embodiment in which a firewall box 612 serves as a cloud proxy for a set of industrial devices 606₁ - 606_{N}. Firewall box 612 can act as a network infrastructure device that allows plant network 616 to access an outside network such as the Internet, while also providing firewall protection that prevents unauthorized access to the plant network 616 from the Internet. In addition to these firewall functions, the firewall box 612 can include a cloud gateway 608 that interfaces the firewall box 612 with one or more cloud-based services. In a similar manner to proxy industrial device 506₁ of FIG. 5, the tirewall box 612 can collect industrial data 614 from industrial devices 606₁ - 606_{N}, which monitor and control respective portions of controlled process(es) 602. Firewall box 612 can include a cloud gateway 608 that applies appropriate pre-processing to the gathered industrial data 614 prior to pushing the data to the cloud-based predictive maintenance system as cloud data 604. Firewall box 612 can allow industrial devices 606₁ - 606_{N} to interact with the cloud platform without directly exposing the industrial devices to the Internet.

In some embodiments, cloud gateways 508 or 608 can tag the collected industrial data with contextual metadata prior to pushing the data to the cloud platform. Such contextual metadata can include, for example, a time stamp, a location of the device at the time the data was generated, or other such information. In another example, some cloud-aware devices can comprise smart devices capable of determining their own context within the plant or enterprise environment. Such devices can determine their location within a hierarchical plant context or device topology. Data generated by such devices can adhere to a hierarchical plant model that defines multiple hierarchical levels of an industrial enterprise (*e.g*., a workcell level, a line level, an area level, a site level, an enterprise level, *etc.*)*,* such that the data is identified in terms of these hierarchical levels. This can allow a common terminology to be used across an entire industrial enterprise to identify devices and their associated data. Cloud-based applications and services that model an enterprise according to such an organizational hierarchy can represent industrial controllers, devices, machines, or processes as data structures (*e.g*., type instances) within this organizational hierarchy to provide context for data generated by devices within the enterprise relative to the enterprise as a whole. Such a convention can replace the flat name structure employed by some industrial applications.

In some embodiments, cloud gateways 508 and 608 can comprise unidirectional "data only" gateways that are configured only to move data from the premises to the cloud platform. Alternatively, cloud gateways 508 and 608 can comprise bi-directional "data and configuration" gateways that are additionally configured to receive configuration or instruction data from services running on the cloud platform. Some cloud gateways may utilize store-and-forward technology that allows the gathered industrial data to be temporarily stored locally on storage associated with the cloud gateway in the event that communication between the gateway and cloud platform is disrupted. In such events, the cloud gateways will forward the stored data to the cloud platform when the communication link is reestablished.

To ensure a rich and descriptive set of data for analysis purposes, the cloud-based attestation system can collect device data in accordance with one or more standardized device models. To this end, a standardized device model can be developed for each industrial device. Device models profile the device data that is available to be collected and maintained by the attestation system.

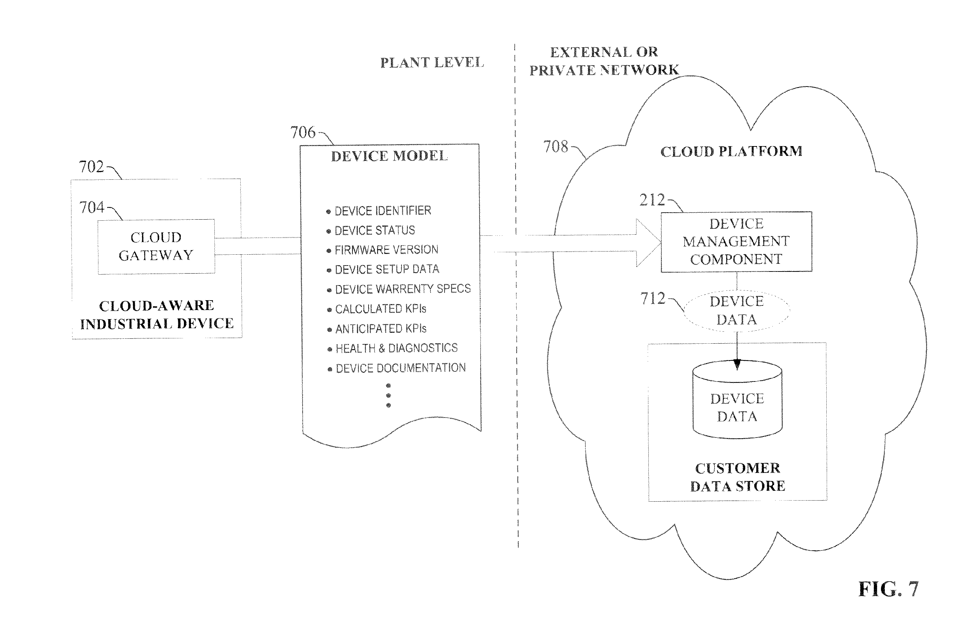

FIG. 7 illustrates an example device model according to one or more embodiments. In the illustrated example, device model 706 is associated with a cloud-aware industrial device 702 (*e.g*., a programmable logic controller, a variable frequency drive, a human-machine interface, a vision camera, a barcode marking system, *etc.*). As a cloud-aware device, industrial device 702 can be configured to automatically detect and communicate with cloud platform 708 upon installation at a plant facility, simplifying integration with existing cloud-based data storage, analysis, and applications (*e.g*., the predictive maintenance system described herein). When added to an existing industrial automation system, device 702 can communicate with the cloud platform and send identification and configuration information in the form of device model 706 to the cloud platform. Device model 706 can be received by a device management component 212, which then updates the customer's device data 712 based on the device model. In this way, the attestation system can leverage the device model to integrate the new device into the greater system as a whole. This integration can include updating cloud-based applications to recognize the new device, adding the new device to a dynamically updated data model of the customer's industrial enterprise or plant, making other devices on the plant floor aware of the new device, or other such integration functions. Once deployed, some data items comprising device model 706 can be collected and monitored by the cloud-based attestation system on a near real-time basis.

Device model 706 can comprise such information as a device identifier (*e.g*., model and serial number), status information for the device, a currently installed firmware version, device setup data, device warranty specifications, calculated and anticipated KPIs associated with the device (*e.g*., mean time between failures), device health and diagnostic information, device documentation, or other such parameters.

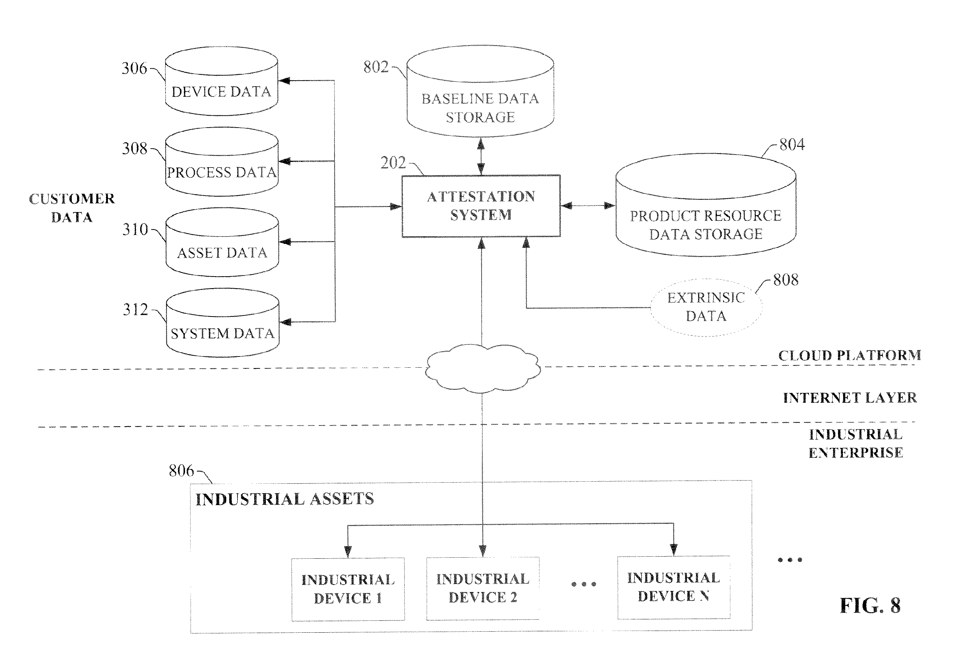

FIG. 8 illustrates a cloud-based system for providing device and system attestation services. As noted above, attestation system 202 can collect, maintain, and monitor customer-specific data (*e.g*. device data 306, process data 308, asset data 310, and system data 312) relating to one or more industrial assets 806 of an industrial enterprise. In one or more embodiments, attestation system 202 can also maintain product resource information in cloud-based product resource data storage 804. In general, product resource data storage 804 can maintain up-to-date information relating to specific industrial devices or other vendor products. Product data stored in product resource data storage 804 can be administered by one or more product vendors or original equipment manufacturers (OEMs). Exemplary device-specific data maintained by product resource data storage 804 can include product serial numbers, most recent firmware revisions, preferred device configuration settings and/or software for a given type of industrial application, or other such vendor-provided information.

Additionally, one or more embodiments of cloud-based attestation system 202 can also leverage extrinsic data 808 collected from sources external to the customer's industrial enterprise, but which may be relevant in connection with affirming correct or optimized operation of the customer's industrial systems and devices. Example extrinsic data 808 can include, for example, energy cost data, material cost and availability data, transportation schedule information from companies that provide product transportation services for the customer, inventory data collected from an upstream material supplier in the supply chain, market indicator data, web site traffic statistics, information relating to known information security breaches or threats, or other such information. Cloud-based attestation system 202 can retrieve extrinsic data 808 from substantially any data source; *e.g.,* servers or other data storage devices linked to the Internet, cloud-based storage that maintains extrinsic data of interest, or other sources.

Attestation system 202 can also allocate a portion of cloud-based storage for baseline data storage 802, which maintains hierarchical, multi-level baseline information for the industrial enterprise comprising industrial assets 806. As will be discussed in more detail below, attestation system 202 can analyze the collected customer data over time in order to identify data subsets associated with normal and/or optimized operation of industrial assets 806. These identified data subsets characterize both configuration and operational aspects of the industrial system during normal operation, including but not limited to device configuration parameters (*e.g*., variable frequency drive parameters, control loop tuning parameters, software code loaded on one or more industrial controllers, *etc*.), process variables (*e.g.,* setpoint values, recipe data, *etc*.), operational statistics (*e.g.,* product count, cycle times, frequency of machine downtimes, *etc*.), operator interactions (*e.g*., keystrokes, sequences of manual control actions, HMI screen navigation, *etc*.), or other aspects. Once these subsets of data have been identified, attestation system 202 can store hierarchical baseline information for the industrial system in baseline data storage 802, where the hierarchical baseline information is generated based on the identified subsets of normal operation data.

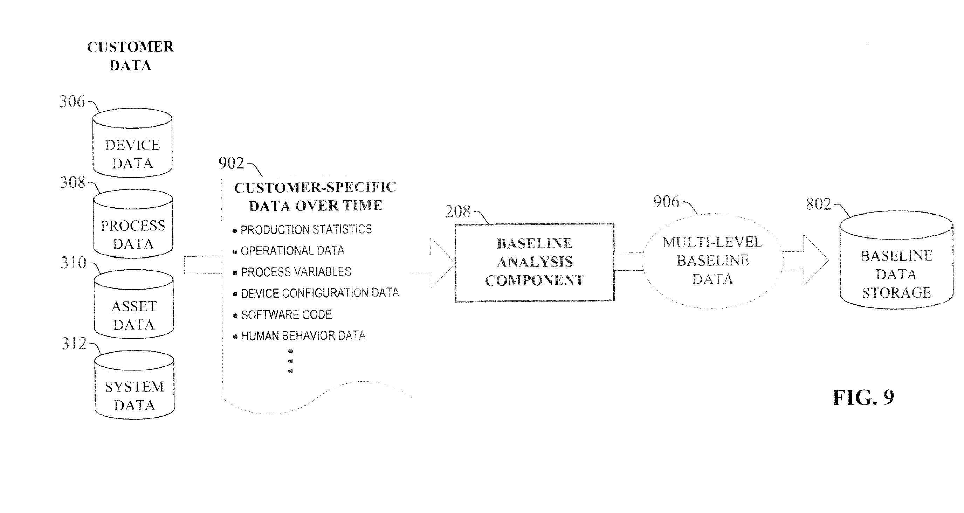

FIG. 9 illustrates generation of multi-level baseline data for a given set of customer data. In one or more embodiments, the cloud-based attestation system can include a baseline analysis component 208 configured to analyze customer-specific data 902 (drawn from one or more of device data 306, process data 308, asset data 310, and/or system data 312) over time in order learn characteristics of the customer's industrial assets during normal operation. As noted above, baseline analysis component 208 can assess production statistics, operational data, process variables, device configuration data, software code, human behavior data, or other such data collected from the system over time in order to learn normal operation of the system. Baseline analysis component 208 can leverage any suitable analysis technique (*e.g.,* machine learning, data mining, *etc*.) in order to learn, from an initially noisy set of data, how to recognize normal system operation from a data perspective. For example, one or more embodiments of baseline analysis component 208 can identify dependencies or correlations between aspects of the customer's industrial system(s) that may otherwise be hidden to the customer. Over time, baseline analysis component 208 can also learn to identify and reject data associated with a failed, abnormal, or otherwise non-optimal production run, so that only subsets of customer data associated with successful, normal, or optimal production runs are used to calculate baseline data for the industrial system.

Baseline analysis component 208 can continue to analyze the customer data over time until achieving a degree of confidence that data characteristics of a normal production run of the customer's industrial system can be recognized. Once the data characteristics of a normal production run have been identified, baseline analysis component 208 generates a set of multi-level baseline data 906 based on these data characteristics for storage in baseline data storage 802. Baseline data 906 comprises a set of benchmarks for comparison, where the benchmarks correspond to aspects of the customer's industrial system across multiple hierarchical levels. Baseline data 906 characterizes the context of a normal production run of the industrial system at a high degree of granularity, from the highest levels (*e.g*., plant or supply chain characteristics, production line or production area characteristics, *etc*.) to the lowest levels (*e.g*., asset KPIs, process variables, device configurations, firmware revisions, *etc*.). Baseline data 906 can subsequently be used as a benchmark for comparison when operational issues arise or when product quality metrics deviate from acceptable tolerances, as will be discussed in more detail below.

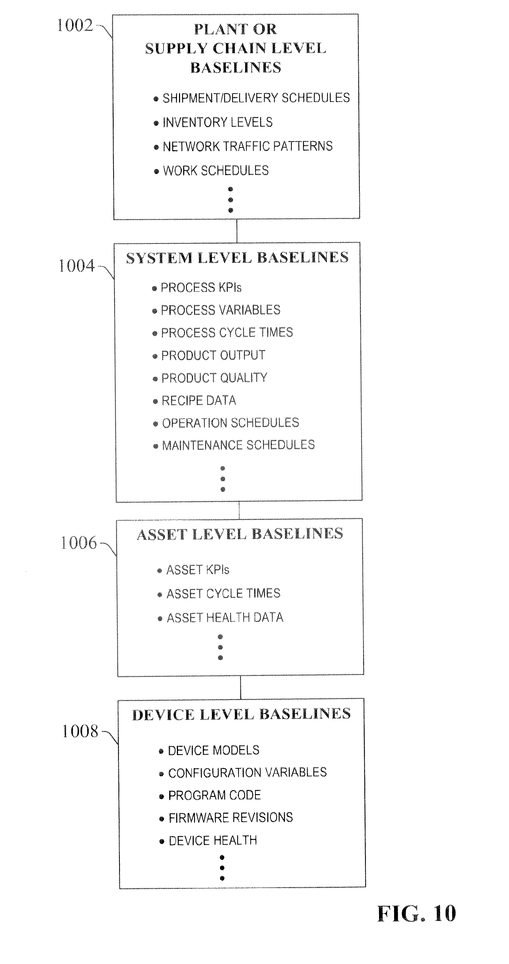

Any suitable technique can be used to generate baseline data 906 from the identified subsets of customer data associated with a good production run. For example, in one or more embodiments, baseline data 906 can comprise hash values generated from the identified sets of customer data using any appropriate hash value calculation algorithm. In such embodiments, baseline analysis component 208 can generate multiple, focused hash values corresponding to multi-level, highly granular aspects of the customer's system. FIG. 10 illustrates example hierarchical system aspects for which baselines (*e.g*. hash values) can be calculated by the baseline analysis component 208. At the device level 1008, a hash value (or other baseline metric) can be generated based on the configuration parameters set for a particular industrial device during successful production run, the device model, the firmware version of the device, software code (*e.g*., ladder logic program) executing on the device, device health information (*e.g*., device faults, abnormals, *etc*.), or other such device level metrics. At the asset level 1006 (representing a collection of devices for performing a portion of a process), hash values can be generated based on asset KPIs measured during a successful run, asset cycle times, asset health information, *etc*. At the system level 1004 (representing a collection of assets that perform an industrial application; *e.g*., a production line), hash values can be generated based on the process variables or setpoints used during a successful production run, process KPIs measured during a successful run, desired product output, quality measurements collected for a successful run, process health metrics (*e.g*., production line downtime occurrences, *etc*.), production line cycle times, recipe data, operation schedules, maintenance schedules, *etc*. At the plant or supply chain level 1002, hash values can be generated based on work schedule data, part or ingredient delivery schedules, order information, inventory data, plant network traffic patterns or network loading during normal plant operation, *etc*.

In addition to the metrics described above, one or more embodiments of the baseline analysis component 208 can also track and learn human behaviors that are conducive to proper operation of the customer's industrial systems. For example, the cloud-based attestation system may be configured to infer operator interactions with certain industrial assets by monitoring keystrokes, mouse movements, HMI screen navigations and/or inputs, order and timing of manual control panel operations (determined, for examples, by monitoring the states of the control panel's selector switches and push buttons), operator movements through the production area or plant (*e.g.,* by tracking a personal device carried by the operator), *etc*. As in previous examples, based on analysis of the collected customer data - including human behavior data - over time, baseline analysis component 208 can learn associations between certain sequences of operator interactions and proper system behavior or performance. Based on these learned associations, baseline analysis component 208 can record these interactions in cloud storage and/or generate a baseline metric based on these preferred operator interactions for subsequent comparative purposes.

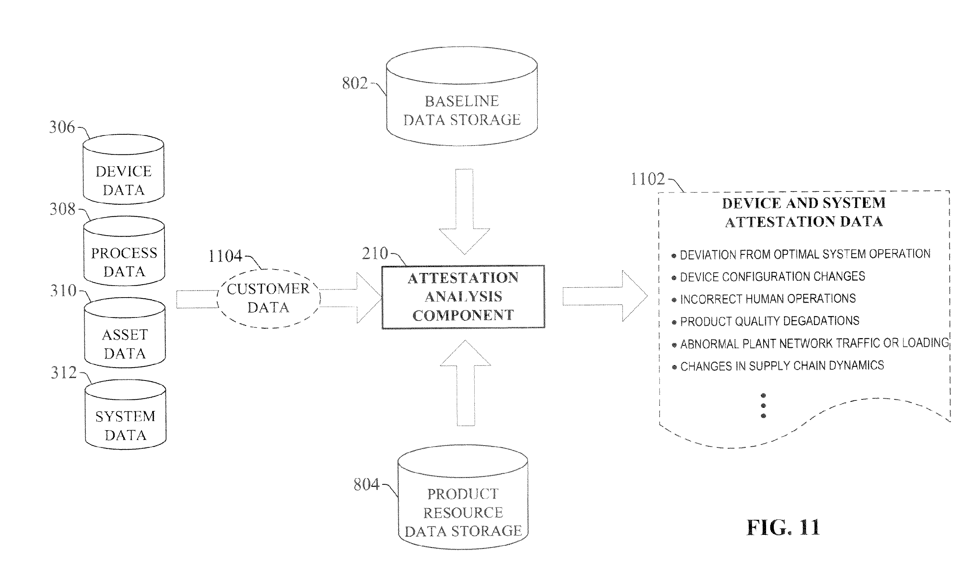

Once baseline analysis component 208 has established and stored a set of hierarchical, multi-level baselines for the customer's industrial systems, the cloud-based attestation system can use the baselines to assist the customer in maintaining correct system operation or to troubleshoot possible root causes of a detected system inefficiency or failure. FIG. 11 illustrates generation of device and system attestation data by the cloud-based attestation system. As described above, baseline data storage 802 can maintain the set of multi-level baselines generated based on monitoring and analysis of the customer's industrial data over time. With these baselines in place, attestation analysis component 210 can identify deviations from ideal system operation at a high degree of granularity. In some embodiments, attestation analysis component 210 can search for such deviations on demand. On-demand analysis may be appropriate, for example, if a device or system failure or inefficiency has been observed. In such scenarios, plant personnel or a remote customer service specialist may access cloud-based attestation system to compare current or recent customer data 1104 with the baseline values maintained in baseline data storage 802 in order to identify where and how the customer's industrial system has changed subsequent to creation of the baselines.

For example, if the baseline data has been generated in the form of hash values as described above, attestation analysis component 210 can generate new hash values based on customer data 1104, where the new hash values correspond to the system aspects (*e.g*., device configurations, KPIs, device programming, network loading, *etc*.) for which the baseline hash values were created. In this regard, attestation analysis component 210 can identify subsets of customer data 1104 corresponding to the system aspects for which the baseline values were created, and generate new hash values based on the identified subsets using the same hash algorithms used to create the baseline hash values. Attestation analysis component 210 can compare the new hash values to the baseline hash values, and deviations between corresponding new and baseline hash values can be used to identify aspects of the customer's industrial system that have changed relative to optimal baseline operation. For example, if a new hash value corresponding to a motor drive configuration is found to deviate from its corresponding baseline hash value, attestation analysis component 210 can flag the motor drive configuration as a possible root cause of an identified system performance degradation (*e.g*., a longer cycle time, an increase in downtime frequency or duration, *etc*.).

Based on such analysis, attestation analysis component 210 can report identified deviations in the form of device and system attestation data 1102. Using techniques described above, attestation data 1102 can report deviations across multiple levels of the industrial system, including but not limited to deviations from optimal or preferred system operation, device configuration changes, changes in device firmware versions, incorrect human operations (*e.g*., improper interaction with a machine control panel, incorrect manual control sequences, *etc*.), product quality degradations, abnormal plant network traffic or loading, changes in supply chain dynamics (*e.g*., delayed product or part delivery schedules, changes in inventory levels, *etc*.), changes in work schedules, changes in resource utilization, or other such system changes that may be a root cause of overall system performance failures, degradations, or inefficiencies.

In addition to identifying alterations to the customer's system relative to previously identified baselines, one or more embodiments of attestation analysis component 210 may also identify instances of non-optimal device selection or configuration based on a comparison of customer data 1104 with vendor-provided information stored in product resource data storage 804. For example, attestation analysis component 210 may cross-reference a device identifier collected from a customer device with product resource data storage 804 in order to determine whether the firmware version currently installed on the device is current. As noted above, product resource data storage 804 can include vendor-provided product information regarding current firmware versions, software versions, hardware versions, *etc.* Accordingly, attestation analysis component 210 can retrieve product resource data for the device identified by the retrieved device identifier, compare the firmware version number retrieved from device data 306 with the most recent firmware version number indicated by product resource data storage 804, and determine whether the on-premises device is using the most recent firmware version. If the firmware version installed on the on-premises device is determined to be outdated or obsolete, attestation analysis component 210 can report the outdated device firmware version via attestation data 1102.

Although the preceding example describes identification of outdated firmware version, some embodiments of attestation analysis component 210 can identify other possible device concerns based on a comparison of customer data 1104 with product resource data. For example, attestation analysis component 210 can identify that the customer is using an outdated device model by cross-referencing a collected device identifier stored in device data 306 with the product resource data. In another example, product resource data storage 804 may include information relating to known device incompatibility issues reported by a vendor of a particular device. Based on this information, attestation analysis component 210 may determine (based on customer data 1104) that a reported compatibility issue applies to the customer's particular asset configuration (*e.g*., one of the customer's industrial assets includes the combination of devices known to have a compatibility concern). This issue can then be reported via attestation data 1102.

In the foregoing examples, attestation analysis component 210 is described as performing system and device attestation services on an on-demand basis. In such scenarios, a user (e.g., plant maintenance personnel, remote support personnel, *etc*.) may send a request to perform attestation on an industrial system (*e.g*., in response to an observed performance issue). In some embodiments, attestation analysis component 210 can also be configured to perform continuous attestation services, such that attestation analysis component 210 monitors the customer data on a near real-time basis and generates a notification in response to a determination that one or more system aspects have deviated (or are at risk of deviating) from their corresponding baselines. In response to such determinations, the cloud-based attestation system can deliver suitable alerts to specified client devices.

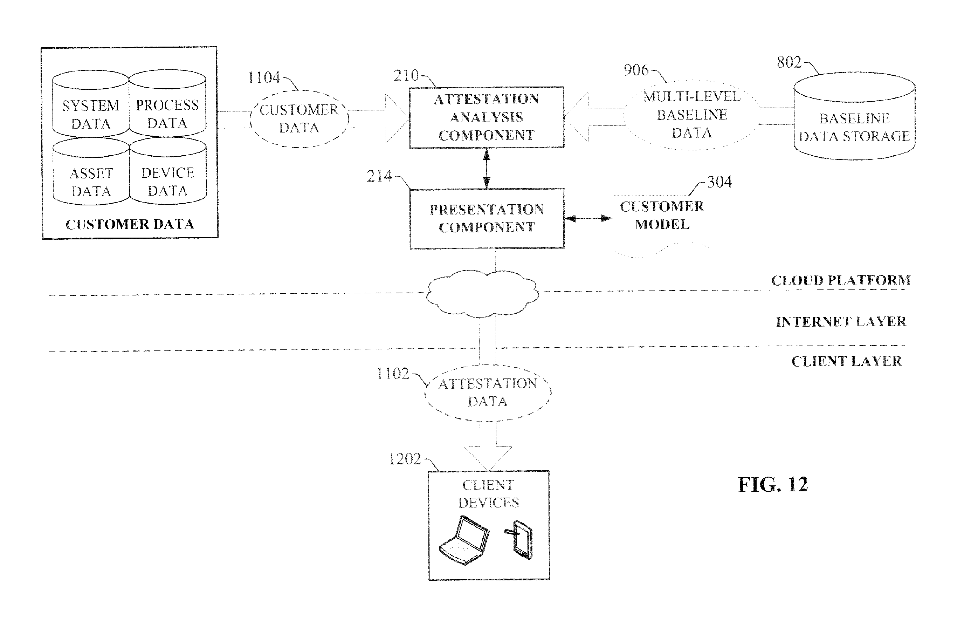

FIG. 12 illustrates delivery of attestation data 1102 to a cloud-capable client device via the cloud platform. In an example scenario, based on comparison between customer data 1104 and multi-level baseline data 906 as described above, attestation analysis component 210 can generate a report in the form of attestation data 1102, and instruct presentation component 214 to deliver attestation data 1102 to one or more identified client devices 1202. In scenarios in which device and system attestation has been requested by a particular client device, attestation data 1102 will be delivered to the requesting device. For systems in which real-time attestation is being performed based on continuous monitoring of customer data, attestation analysis component 210 will generate an attestation report or notification in response to detection of a baseline deviation indicative of a real or potential performance concern. In such cases, presentation component 214 can identify the client devices 1202 that are to receive the report by referencing customer model 304, which includes client contact information specifying which plant personnel should be notified in response to detection of certain performance concerns, notification preferences specifying how the plant personnel should be notified (*e.g*., email, mobile phone, text message, *etc*.), and other such notification preferences. For example, customer model 304 may specify that notifications relating to a possible impending machine failure (*e.g*., based on a determination that a particular asset KPI is at risk of deviating from its baseline tolerance) should be delivered to one or more client devices associated with selected maintenance personnel, while notifications relating to firmware upgrades or incorrect device configurations should be delivered to a client device associated with a plant engineer. Notification preferences defined in the customer model 304 may also be a function of a particular plant facility, area, or workcell to which the notification relates. Once the appropriate client devices have been determined, presentation component 214 can deliver attestation data 1102 to the identified notification destinations. Attestation data 1102 can be sent to identified Internet-capable client devices (*e.g*., phones, tablet computers, desktop computers, or other suitable devices), and can be presented in any suitable format (*e.g*., text-based notification, interactive graphical presentation, *etc*.).

In some embodiments, a cloud application running on the cloud platform can provide a mechanism for notified personnel to communicate with one another via the cloud (*e*.*g*., establish a conference call using Voice-over-IP). Presentation component 214 can also be configured to send notifications periodically at a defined frequency until the receiver positively responds to the notification (*e.g*., by sending a manual acknowledgement via the client device). In some embodiments, presentation component 214 can be configured to escalate an urgency of high-priority notifications if an acknowledgment is not received within a predetermined amount of time. This urgency escalation can entail sending the notifications at a gradually increasing frequency, sending the notifications to devices associated with secondary personnel if the primary personnel do not respond within a defined time period, or other such escalation measures.

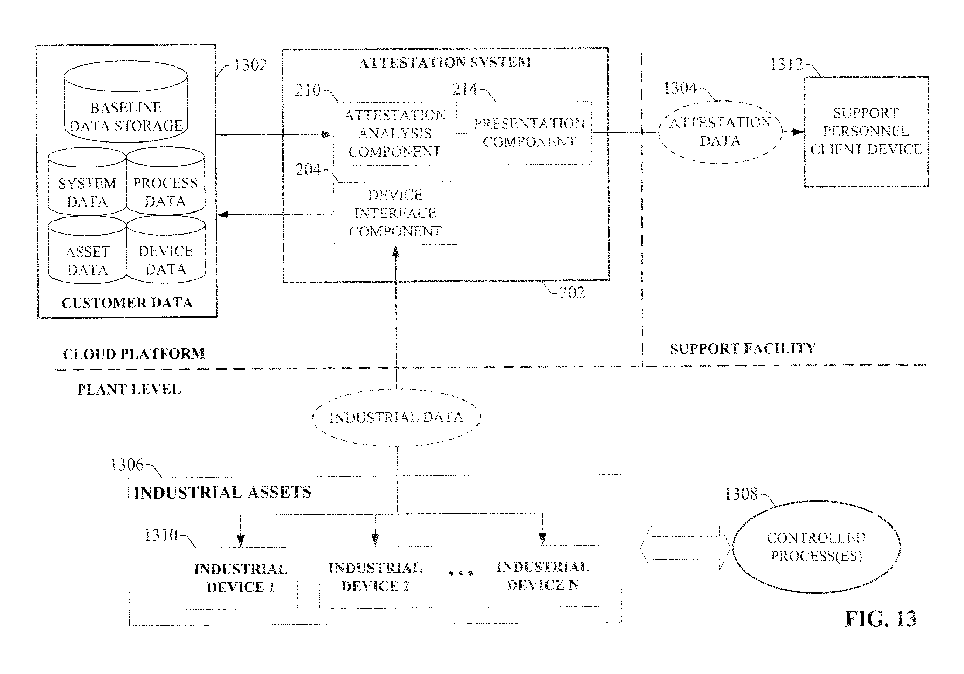

In one or more embodiments, the cloud-based attestation system can also be accessed by remote technical support personnel so that remote assistance can be provided to an industrial asset owner. FIG. 13 illustrates an example cloud-based architecture that allows remote technical support personnel to generate and/or view attestation data for a customer's industrial systems. In this example, one or more controlled processes 1308 are monitored and/or controlled by one or more industrial assets 1306, which comprise one or more industrial devices 1310. Industrial devices 1310 can comprise, for example, industrial controllers, sensors, meters, motor drives, or other such devices. As described in previous examples, a cloud-based attestation system 202 can collect industrial data from the industrial devices 1310 (*e.g*., via device interface component 204) and store the data in customer-specific cloud storage (not shown) according to a hierarchical classification structure. Industrial devices 1310 can provide their data to the cloud platform via individual cloud gateways executing on the devices, or via a proxy device (*e.g*., another industrial device, a dedicated server, a network infrastructure device, *etc*.) that runs such a cloud gateway.

As described above, attestation system 202 can collect the industrial data and generate hierarchical, multi-level baselines (*e.g*., hash values or other baseline indicators) for reference purposes. In the present example, a representative of an industrial enterprise that owns industrial assets 1306 may contact a remote support facility for assistance with an observed performance problem with industrial assets 1306. Accordingly, a technical support representative at the support facility can access the cloud platform via a cloud-capable support personnel client device 1312 in order to view data in the customer's data store. Specifically, the support representative can remotely access the cloud-based attestation system 202 to request an attestation analysis of customer data 1302 recently collected from industrial assets 1306.

In response, attestation analysis component 210 compares the recently collected customer data with the baseline data maintained in baseline data storage, as described in previous examples, and presentation component 214 delivers an attestation report (attestation data 1304) to the support personnel client device 1312, indicating which aspects of industrial assets have changed relative to the acceptable baselines. For example, the attestation report can identify to the support personnel which industrial devices 1310 have been reprogrammed or reconfigured, which devices have been loaded with new firmware, operator interactions with one or more machines that have deviated from a preferred manual sequence, recipe changes, increases in data traffic on the plant network relative to normal operations, *etc.* The attestation report may also identify higher level deviations from the baseline standards, such as alterations in work schedules or maintenance schedules, changes in product transportation schedules, changes in inventory levels, or other such deviations from standard plant operations characterized by the baseline metrics. In this way, the remote service personnel can identify aspects of the customer's industrial system that have changed since relative to their previously determined baselines and make a determination regarding which of the identified changes may be a root cause of the reported performance issue.

Presentation component 214 can present attestation data 1304 to the support personnel client device 1312 (or client devices 1202) in any suitable format. In one or more embodiments, presentation component 214 can generate an interactive graphical representation of the customer's industrial system, including graphical representations of the customer's devices, assets, production lines, plant facilities, *etc*. Attestation data 1304 can be overlaid on this representation by highlighting the aspects (*e.g*., devices, production lines, facilities, *etc*.) that have deviated from their corresponding baselines based on results of attestation analysis. Since attestation analysis is performed across multiple hierarchical levels of the industrial enterprise, presentation component 214 can configure the graphical system representation to allow the viewer (*e.g*., the remote technical support personnel) to drill down through multiple hierarchical views of the customer's industrial enterprise (*e.g*., an enterprise level view, a plant level view, a production area view, a device level view, *etc*.). Within each hierarchical view, presentation component 214 can graphically indicate representations of plant facilities, production areas, assets, devices, *etc.* identified as having been altered relative to their respective baseline standards. Thus, presentation component 214 can generate a navigable, virtual representation of the customer's industrial enterprise based collected customer data 1302, and overlay attestation data on the various graphical elements representing the customer's industrial assets.

In one or more embodiments, cloud-based attestation system 202 can also facilitate automated support services. For example, depending on the nature of the service agreement between the customer and the technical support entity, attestation system 202 may initiate contact with customer support personnel in response to a determination by attestation system 202 that a particular device or asset is not operating correctly, or that the device/asset has been reconfigured in a manner that places the device/asset outside its baseline standard. In response to such a determination, attestation system 202 can access customer model 304 to determine the type of service contract active for the customer. If the customer service contract does not support automated personal technical support, attestation system 202 may only send a notification of the identified issue to plant personnel, including details regarding the nature of the problem and possible countermeasures (*e.g*., restoration of a device's correct configuration, adjustment of a modified production schedule, *etc*.).

Alternatively, if the service contract entitles the customer to automated personal support, attestation system 202 may send a notification to technical support personnel at the support facility apprising of the detected attestation concern. The notification can include support data derived from the customer model 304 and any necessary subset of the collected customer data required to quickly convey the nature of the issue to the technical support personnel. Thus, by virtue of the automated attestation functions combined with the detailed profile of the customer's industrial assets maintained in the cloud-based customer data store, embodiments of cloud-based attestation system can automatically communicate detailed information regarding the nature of the problem, the industrial devices in use at the customer's facility, the configuration settings of those devices, the relationships between the devices, the customer's industrial concern, and other relevant information. Attestation system 202 can thus provide accurate customer-specific information to the technical support facility without reliance upon plant personnel to convey details of the customer's particular automation systems.

Attestation data 1304 can be delivered to one or more selected support personnel client devices 1312 (*e.g*., a technical support workstation or portable device). In some scenarios, selection of appropriate support personnel can be a function of the nature of the detected issue; that is, presentation component 214 can route the notification and associated customer data to a technical support engineer known to possess expertise in the relevant industry and/or devices of concern. Destinations for the technical support notification can also be based on support preferences specified in customer model 304. For example, customer model 304 may define a preferred technical support engineer to be notified in the event of a detected system performance issue, or maintain a history of previous customer interactions with the technical support entity. Presentation component 214 may select suitable destinations for support notifications based in part on these factors. Depending on the nature of the detected issue, customer support personnel may then proactively initiate contact with relevant plant personnel to discuss possible countermeasures.

Predictive maintenance system 1212 may support other types of interaction with the support facility to facilitate automated proactive countermeasures in response to identified attestation concerns. For example, if attestation system 202 determines that an identified issue requires an on-site visit by technical support personnel (*e.g*., an improperly configured device requires an expert technical support representative to restore the correct configuration), the system can automatically schedule a technical support representative to be dispatched to the customer facility. Attestation system 202 can provide the technical support personnel with relevant details of the customer's particular system and the nature of the problem to be solved, and generate any necessary work orders in connection with dispatching a service engineer to the customer facility. Thus, attestation system 202 can provide automated monitoring and maintenance of a customer's industrial systems even in the absence of plant personnel who possess sufficient knowledge of on-site assets.

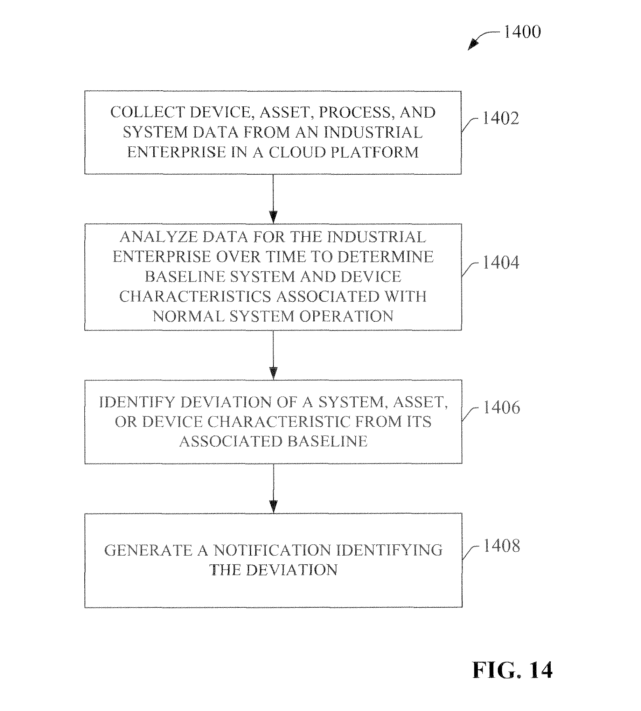

FIGs 14-16 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 14 illustrates an example methodology 1400 for performing system and device attestation on an industrial system. Initially, at 1402, device, asset, process, and system data from an industrial enterprise are collected in a cloud platform. The data can be migrated to the cloud using one or more cloud gateways that serve as uni-directional or bi-directional communication interfaces between industrial devices and the cloud platform. The device, asset, process, and system data can be stored in association with a customer identifier and other customer-specific information on cloud storage.

At 1404, the collected data for the industrial enterprise is analyzed in the cloud platform over time to determine baseline system and device characteristics associated with normal system operation. These baseline characteristics can be determined for diverse aspects of the industrial enterprise over multiple hierarchical levels, including but not limited to device programs and configurations, system and asset KPIs, production line cycle times, process variables, recipe data, asset health statistics, or other such features of the industrial enterprise. The baseline characteristics can then be stored in cloud-based storage for comparative purposes.

At 1406, based on system data from collected from the industrial enterprise subsequent to determination of the baseline characteristics at step 1404, a deviation of a system, asset, or device characteristic from its associated baseline is identified. At 1408, a notification is generated identifying the deviation. The notification can include information regarding which aspect of the industrial enterprise has been changed since determination of the baselines (*e.g*., an industrial device that has been replaced with a different model or whose programming or configuration has been altered, a plant network segment that experiences higher than average data traffic, a device or asset cycle time increase, *etc*.). The notification can comprise any suitable format, including but not limited to a text-based report or an interactive graphical representation of the industrial enterprise.

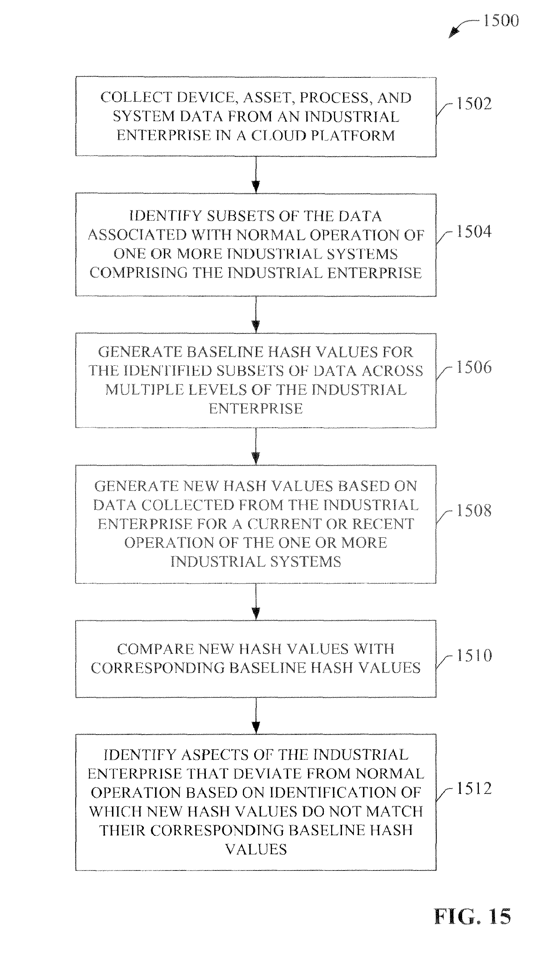

FIG. 15 illustrates an example methodology 1500 for performing device or system attestation in a cloud platform using hash values. Initially, at 1502, device, asset, process, and system data from an industrial enterprise are collected in a cloud platform, as described in previous examples. At 1504, subsets of the collected data stored in the cloud platform and associated with normal operation of one or more industrial systems of the industrial enterprise are identified. The subsets can correspond to multiple diverse aspects of the industrial enterprise, including but not limited to device configurations and programming, work schedules, network traffic patterns, manual control panel operation sequences, asset and device KPIs, product output and quality, *etc*.

At 1506, baseline hash values for the identified subsets of data are generated. The hash values can be generated for aspects across multiple levels of the industrial enterprise (*e.g*., supply chain level, plant level, system level, asset level, device level, *etc*.). The baseline hash values can be calculated using any suitable hash algorithm. At 1508, new hash values are generated for the industrial enterprise based on data collected after generation of the baseline hash values at step 1506. At 1510, the new hash values are compared to their corresponding baseline hash values (determined at step 1506). At 1512, aspects of the industrial enterprise that have deviated from normal operation are identified based on identification of which new hash values do not match their corresponding baseline hash values. A report or graphical presentation identifying the deviant aspects can then be generated and delivered to a cloud-capable client device.

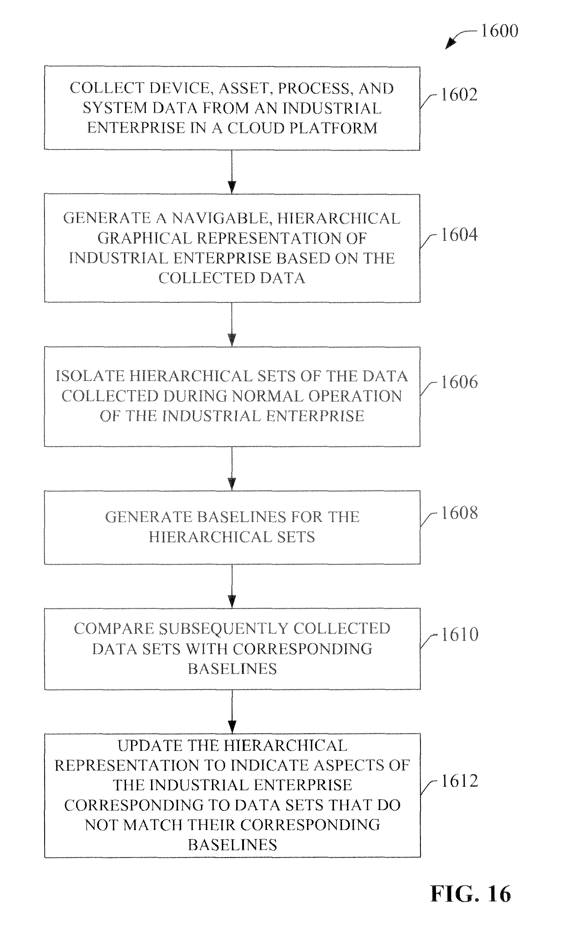

FIG. 16 illustrates an example methodology 1600 for updating a hierarchical graphical representation of an industrial enterprise to identify deviations from normal operation. Initially, at 1602, device, asset, process, and system data from an industrial enterprise are collected in a cloud platform, as described in previous examples. At 1604, a navigable, hierarchical graphical representation of the industrial enterprise is generated based on the collected data. In one or more embodiments, the graphical representation can comprise a three-dimensional virtual representation of the industrial enterprise that can be accessed via the cloud platform. The virtual representation can be navigated by traversing graphical representations of production areas comprising the industrial enterprise and by moving between hierarchical levels of the enterprise (*e.g*., plant level, system level, device level, *etc.).* The graphical representation can include graphical icons representing industrial assets and devices, production areas, plant facilities, *etc.*

At 1606, hierarchical sets of the data collected during normal operation of the industrial enterprise are isolated. In one or more embodiments, analytics components of an attestation system executing on the cloud platform can learn normal operation of the enterprise by monitoring the collected data over time. Once the analytics components have identified and characterized normal operation, the attestation system can segregate subsets of the collected data collected during normal operation from other subsets collected during abnormal or substandard operation. The isolated sets of normal operational data can represent diverse, multi-level aspects of the industrial enterprise.

At 1608, baselines are generated for the hierarchical sets, as described in previous examples. At 1610, data sets collected from the industrial enterprise subsequent to generation of the baselines at 1608 are compared with their corresponding baselines. At 1612, the hierarchical representation is updated to indicate aspects of the industrial enterprise that have deviated from their baseline standards, based on a determination of which new data sets do not match their corresponding baselines. The deviant aspects can be indicated using any suitable graphical technique (*e*.*g*., color change, overlayed text, *etc*.).

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate via the network, which includes control, automation, and/or public networks. The PLC or automation controller can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

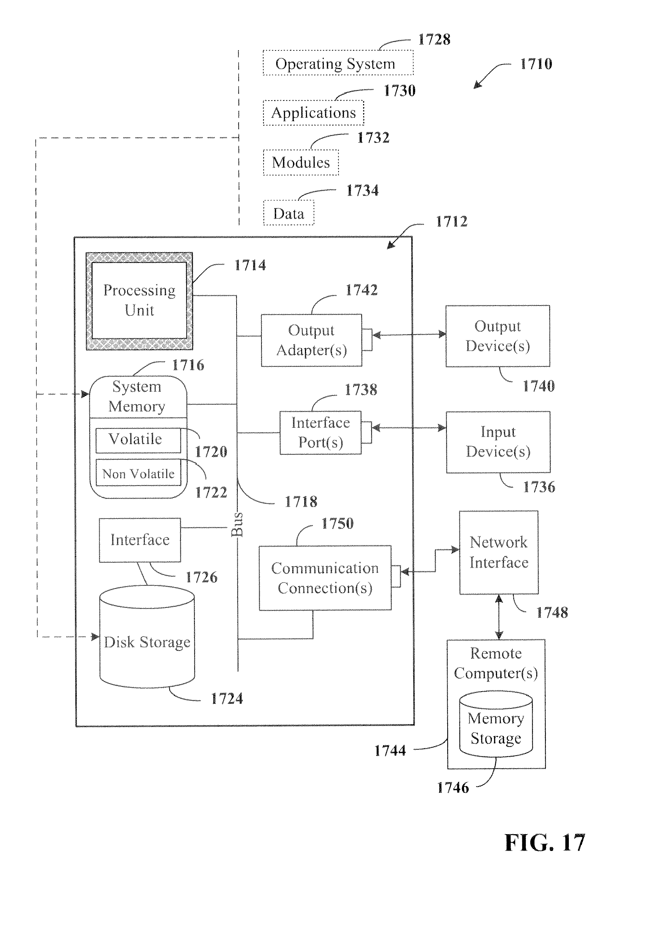

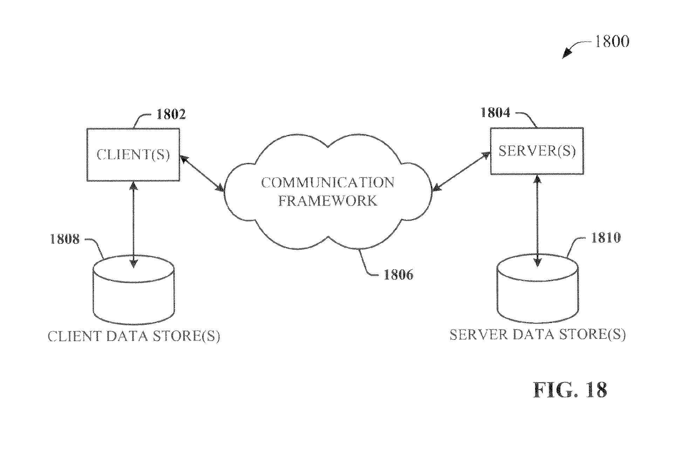

In order to provide a context for the various aspects of the disclosed subject matter, FIGs. 17 and 18 as well as the following discussion are intended to provide a brief, general description of a suitable environment in which the various aspects of the disclosed subject matter may be implemented.

With reference to FIG. 17, an example environment 1710 for implementing various aspects of the aforementioned subject matter includes a computer 1712. The computer 1712 includes a processing unit 1714, a system memory 1716, and a system bus 1718. The system bus 1718 couples system components including, but not limited to, the system memory 1716 to the processing unit 1714. The processing unit 1714 can be any of various available processors. Multi-core microprocessors and other multiprocessor architectures also can be employed as the processing unit 1714.

The system bus 1718 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1716 includes volatile memory 1720 and nonvolatile memory 1722. The basic input/output system (BIOS), containing the basic routines to transfer information between elements within the computer 1712, such as during start-up, is stored in nonvolatile memory 1722. By way of illustration, and not limitation, nonvolatile memory 1722 can include read only memory (ROM), programmable ROM (PROM), electrically programmable ROM (EPROM), electrically erasable PROM (EEPROM), or flash memory. Volatile memory 1720 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1712 also includes removable/non-removable, volatile/nonvolatile computer storage media. FIG. 17 illustrates, for example a disk storage 1724. Disk storage 1724 includes, but is not limited to, devices like a magnetic disk drive, floppy disk drive, tape drive, Jaz drive, Zip drive, LS-100 drive, flash memory card, or memory stick. In addition, disk storage 1724 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1724 to the system bus 1718, a removable or non-removable interface is typically used such as interface 1726.

It is to be appreciated that FIG. 17 describes software that acts as an intermediary between users and the basic computer resources described in suitable operating environment 1710. Such software includes an operating system 1728. Operating system 1728, which can be stored on disk storage 1724, acts to control and allocate resources of the computer 1712. System applications 1730 take advantage of the management of resources by operating system 1728 through program modules 1732 and program data 1734 stored either in system memory 1716 or on disk storage 1724. It is to be appreciated that one or more embodiments of the subject disclosure can be implemented with various operating systems or combinations of operating systems.

A user enters commands or information into the computer 1712 through input device(s) 1736. Input devices 1736 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1714 through the system bus 1718 via interface port(s) 1738. Interface port(s) 1738 include, for example, a serial port, a parallel port, a game port, and a universal serial bus (USB). Output device(s) 1640 use some of the same type of ports as input device(s) 1736. Thus, for example, a USB port may be used to provide input to computer 1712, and to output information from computer 1712 to an output device 1740. Output adapters 1742 are provided to illustrate that there are some output devices 1740 like monitors, speakers, and printers, among other output devices 1740, which require special adapters. The output adapters 1742 include, by way of illustration and not limitation, video and sound cards that provide a means of connection between the output device 1740 and the system bus 1718. It should be noted that other devices and/or systems of devices provide both input and output capabilities such as remote computer(s) 1744.

Computer 1712 can operate in a networked environment using logical connections to one or more remote computers, such as remote computer(s) 1744. The remote computer(s) 1744 can be a personal computer, a server, a router, a network PC, a workstation, a microprocessor based appliance, a peer device or other common network node and the like, and typically includes many or all of the elements described relative to computer 1712. For purposes of brevity, only a memory storage device 1746 is illustrated with remote computer(s) 1744. Remote computer(s) 1744 is logically connected to computer 1712 through a network interface 1748 and then physically connected via communication connection 1750. Network interface 1748 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1750 refers to the hardware/software employed to connect the network interface 17748 to the system bus 1718. While communication connection 1750 is shown for illustrative clarity inside computer 1712, it can also be external to computer 1712. The hardware/software necessary for connection to the network interface 1748 includes, for exemplary purposes only, internal and external technologies such as, modems including regular telephone grade modems, cable modems and DSL modems, ISDN adapters, and Ethernet cards.

FIG. 18 is a schematic block diagram of a sample computing environment 1800 with which the disclosed subject matter can interact. The sample computing environment 1800 includes one or more client(s) 1802. The client(s) 1802 can be hardware and/or software (*e.g*., threads, processes, computing devices). The sample computing environment 1800 also includes one or more server(s) 1804. The server(s) 1804 can also be hardware and/or software (*e.g*., threads, processes, computing devices). The servers 1804 can house threads to perform transformations by employing one or more embodiments as described herein, for example. One possible communication between a client 1802 and servers 1804 can be in the form of a data packet adapted to be transmitted between two or more computer processes. The sample computing environment 1800 includes a communication framework 1806 that can be employed to facilitate communications between the client(s) 1802 and the server(s) 1804. The client(s) 1802 are operably connected to one or more client data store(s) 1808 that can be employed to store information local to the client(s) 1802. Similarly, the server(s) 1804 are operably connected to one or more server data store(s) 1810 that can be employed to store information local to the servers 1804.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example. instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks [*e.g*., compact disk (CD), digital versatile disk (DVD)...], smart cards, and flash memory devices (*e.g*., card, stick, key drive...).

### The following is a list of further preferred embodiments of the invention:

Embodiment 1. A system for confirming a defined operation of an industrial enterprise, comprising:
   a memory that stores computer-executable components;
   a processor, operatively coupled to the memory, that executes computer-executable components, the computer-executable components comprising:
      a device interface component configured to collect industrial data from an industrial enterprise and store the industrial data on a cloud platform; and
      a baseline analysis component configured to identify subsets of the industrial data associated with a defined operation of the industrial enterprise and to generate baselines based on the subsets of the industrial data.
Embodiment 2. The system of embodiment 1, wherein the defined operation comprises an operation determined to satisfy a criterion, wherein the criterion is at least one of a product output criterion, an energy consumption criterion, a financial criterion, or a maintenance criterion.
Embodiment 3. The system of embodiment 1, wherein the industrial data comprises first industrial data, and wherein the system further comprises an attestation analysis component configured to identify aspects of the industrial enterprise that have altered based on a comparison of second industrial data collected from the industrial enterprise with the baselines.
Embodiment 4. The system of embodiment 3, wherein the second industrial data is collected subsequent to collection of the first industrial data.
Embodiment 5. The system of embodiment 1, wherein the subsets of the industrial data correspond to aspects of the industrial enterprise across multiple levels of the industrial enterprise, and wherein the aspects comprise at least one of a device model, a device configuration, a device program, a key performance indicator, process variable, a recipe, an ingredient, a work schedule, a production line output quantity, a product quality metric, a machine downtime frequency, a delivery schedule, an inventory level, a network traffic loading, a cycle time, or a device firmware revision.
Embodiment 6. The system of embodiment 3, further comprising a presentation component configured to generate presentation output identifying the aspects of the industrial enterprise that have altered.
Embodiment 7. The system of embodiment 6, wherein the presentation output comprises a three-dimensional hierarchical graphical representation of the industrial enterprise.
Embodiment 8. The system of embodiment 3, wherein the attestation analysis component is further configured to confirm correct configuration of an industrial device comprising the industrial enterprise based in part on product resource information maintained on cloud storage.
Embodiment 9. The system of embodiment 6, wherein the presentation component is further configured to deliver an automated notification to one or more client devices in response to a determination by the attestation analysis component that an aspect of the industrial enterprise has altered relative to one of the baselines corresponding to the aspect.
Embodiment 10. The system of embodiment 1, wherein the interface component is further configured to store the industrial data on the cloud platform in association with a customer identifier.
Embodiment 11. The system of embodiment 1, wherein the device interface component is further configured to classify the industrial data according to at least one of a device class, a process class, an asset class, or a system class.
Embodiment 12. The system of embodiment 1, wherein the baselines comprise hash values.
Embodiment 13. A method for affirming a prescribed operation of an industrial system, comprising:
   collecting industrial data from an industrial enterprise in a cloud platform;
   identifying subsets of the industrial data associated with a prescribed operation of the industrial enterprise; and
   generating baselines based on the subsets of the industrial data.
Embodiment 14. The method of embodiment 13, wherein the prescribed operation comprises an operation determined to satisfy a criterion, wherein the criterion is at least one of a product output criterion, an energy consumption criterion, a financial criterion, or a maintenance criterion.
15. The method of embodiment 13, wherein the identifying comprises identifying the subsets of the industrial data corresponding to aspects of the industrial enterprise across multiple levels of the industrial enterprise, and wherein the aspects comprise at least one of a device model, a device configuration, a device program, a key performance indicator, process variable, a recipe, an ingredient, a work schedule, a production line output quantity, a product quality metric, a machine downtime frequency, a delivery schedule, an inventory level, a network traffic loading, a cycle time, or a device firmware revision.
Embodiment 16. The method of embodiment 15, wherein the industrial data comprises first industrial data, and wherein the method further comprises:
   collecting second industrial data from the industrial enterprise in the cloud platform subsequent to collection of the first industrial data;
   identifying subsets of the second industrial data that correspond to the aspects of the industrial enterprise;
   comparing the subsets of the second industrial data to the baselines; and
   identifying a subset of the aspects of the industrial enterprise that have changed relative to the baselines based on the comparing.
Embodiment 17. The method of embodiment 16, further comprising generating a presentation output identifying the subset of the aspects that have changed.
Embodiment 18. The method of embodiment 17, wherein the generating the presentation output comprises generating a three-dimensional virtual representation of the industrial enterprise.
Embodiment 19. The method of embodiment 16, further comprising initiating a sending of an automatic notification to one or more client devices in response to the identifying.
Embodiment 20. The method of embodiment 13, wherein the collecting comprises classifying the industrial data according to at least one of a device class, a process class, an asset class, or a system class.
Embodiment 21. The method of embodiment 13, wherein the generating the baselines comprises generating hash values based on the subsets of the industrial data.
Embodiment 22. A computer-readable medium having stored thereon computer-executable instructions that, in response to execution, cause a computing system to perform operations, the operations comprising:
   collecting, in a cloud platform, industrial data from one or more industrial assets;
   identifying subsets of the industrial data associated with a defined operation of the one or more industrial assets; and
   generating baselines corresponding to the subsets of the industrial data.
Embodiment 23. The computer-readable medium of embodiment 22, wherein the defined operation comprises an operation determined to satisfy a criterion, wherein the criterion is at least one of a product output criterion, an energy consumption criterion, a financial criterion, or a maintenance criterion.
Embodiment 24. The computer-readable medium of embodiment 22, wherein the industrial data comprises first industrial data, and wherein the operations further comprise:
   performing a comparison of second industrial data collected from the one or more industrial assets with the baselines; and
   identifying aspects of the one or more industrial assets that have deviated from corresponding baselines based on a result of the comparison.

## Claims

1. A system for confirming a defined operation of an industrial enterprise, comprising:
a memory that stores computer-executable components;
a processor, operatively coupled to the memory, that executes computer-executable components, the computer-executable components comprising:
a device interface component configured to collect industrial data from an industrial enterprise and store the industrial data on a cloud platform; and
a baseline analysis component configured to identify subsets of the industrial data associated with a defined operation of the industrial enterprise and to generate baselines based on the subsets of the industrial data.

2. The system of claim 1, wherein the defined operation comprises an operation determined to satisfy a criterion, wherein the criterion is at least one of a product output criterion, an energy consumption criterion, a financial criterion, or a maintenance criterion.

3. The system of claim 1 or 2, wherein the industrial data comprises first industrial data, and wherein the system further comprises an attestation analysis component configured to identify aspects of the industrial enterprise that have altered based on a comparison of second industrial data collected from the industrial enterprise with the baselines; and/or wherein the second industrial data is collected subsequent to collection of the first industrial data.

4. The system of any one of claims 1 to 3, wherein the subsets of the industrial data correspond to aspects of the industrial enterprise across multiple levels of the industrial enterprise, and wherein the aspects comprise at least one of a device model, a device configuration, a device program, a key performance indicator, process variable, a recipe, an ingredient, a work schedule, a production line output quantity, a product quality metric, a machine downtime frequency, a delivery schedule, an inventory level, a network traffic loading, a cycle time, or a device firmware revision.

5. The system of claim 3 or 4, further comprising a presentation component configured to generate presentation output identifying the aspects of the industrial enterprise that have altered; and/or
wherein the presentation output comprises a three-dimensional hierarchical graphical representation of the industrial enterprise; or
wherein the attestation analysis component is further configured to confirm correct configuration of an industrial device comprising the industrial enterprise based in part on product resource information maintained on cloud storage.

6. The system of claim 5, wherein the presentation component is further configured to deliver an automated notification to one or more client devices in response to a determination by the attestation analysis component that an aspect of the industrial enterprise has altered relative to one of the baselines corresponding to the aspect.

7. The system of any one of claims 1 to 6, wherein the interface component is further configured to store the industrial data on the cloud platform in association with a customer identifier; or
wherein the device interface component is further configured to classify the industrial data according to at least one of a device class, a process class, an asset class, or a system class; or
wherein the baselines comprise hash values.

8. A method for affirming a prescribed operation of an industrial system, comprising:
collecting industrial data from an industrial enterprise in a cloud platform;
identifying subsets of the industrial data associated with a prescribed operation of the industrial enterprise; and
generating baselines based on the subsets of the industrial data.

9. The method of claim 8, wherein the prescribed operation comprises an operation determined to satisfy a criterion, wherein the criterion is at least one of a product output criterion, an energy consumption criterion, a financial criterion, or a maintenance criterion.

10. The method of claim 8 or 9, wherein the identifying comprises identifying the subsets of the industrial data corresponding to aspects of the industrial enterprise across multiple levels of the industrial enterprise, and wherein the aspects comprise at least one of a device model, a device configuration, a device program, a key performance indicator, process variable, a recipe, an ingredient, a work schedule, a production line output quantity, a product quality metric, a machine downtime frequency, a delivery schedule, an inventory level, a network traffic loading, a cycle time, or a device firmware revision.

11. The method of claim 10, wherein the industrial data comprises first industrial data, and wherein the method further comprises:
collecting second industrial data from the industrial enterprise in the cloud platform subsequent to collection of the first industrial data;
identifying subsets of the second industrial data that correspond to the aspects of the industrial enterprise;
comparing the subsets of the second industrial data to the baselines; and
identifying a subset of the aspects of the industrial enterprise that have changed relative to the baselines based on the comparing.

12. The method of claim 11, further comprising generating a presentation output identifying the subset of the aspects that have changed; and/or
wherein the generating the presentation output comprises generating a three-dimensional virtual representation of the industrial enterprise; or
further comprising initiating a sending of an automatic notification to one or more client devices in response to the identifying.

13. The method of claim 11 or 12, wherein the collecting comprises classifying the industrial data according to at least one of a device class, a process class, an asset class, or a system class; or
wherein the generating the baselines comprises generating hash values based on the subsets of the industrial data.

14. A computer-readable medium having stored thereon computer-executable instructions that, in response to execution, cause a computing system to perform operations, the operations comprising:
collecting, in a cloud platform, industrial data from one or more industrial assets;
identifying subsets of the industrial data associated with a defined operation of the one or more industrial assets; and
generating baselines corresponding to the subsets of the industrial data.

15. The computer-readable medium of claim 14, wherein the defined operation comprises an operation determined to satisfy a criterion, wherein the criterion is at least one of a product output criterion, an energy consumption criterion, a financial criterion, or a maintenance criterion; or
wherein the industrial data comprises first industrial data, and wherein the operations further comprise:
performing a comparison of second industrial data collected from the one or more industrial assets with the baselines; and
identifying aspects of the one or more industrial assets that have deviated from corresponding baselines based on a result of the comparison.
